# EUROPÄISCHE PATENTSCHRIFT

(11) **EP 2 616 869 B1**
(45) Veröffentlichungstag und Bekanntmachung des Hinweises auf die Patenterteilung: **27.01.2016**
(21) Anmeldenummer: 11736391.1
(22) Anmeldetag: 29.07.2011
(51) Int. Cl.: G02B 27/00, G02B 27/01

(54) **HEAD-UP-DISPLAY**
HEAD-UP DISPLAY
ÉCRAN TÊTE HAUTE

(30) Priorität: 14.09.2010 DE 102010040694
(43) Veröffentlichungstag der Anmeldung: 24.07.2013
(73) Patentinhaber: Robert Bosch GmbH, 70442 Stuttgart (DE)
(72) Erfinder: HERZOG, Bernhard, 70619 Stuttgart (DE); WEILKES, Michael, 31199 Diekholzen (DE); MAYER, Ralf, 67295 Bolanden/Weierhof (DE); DE BOER, Gerrit, 31139 Hildesheim (DE); KALLMANN, Ulrich, 72076 Tuebingen (DE)
(86) Internationale Anmeldenummer: PCT/EP2011/063079
(87) Internationale Veröffentlichungsnummer: WO 2012/034767

(56) Entgegenhaltungen:
- EP-A2- 1 333 410
- WO-A2-2004/113991
- DE-A1-102004 031 311
- JP-A- 2010 006 267
- US-A1- 2003 123 027
- US-A1- 2009 243 963
- US-B1- 7 315 241

## Beschreibung

Die Erfindung betrifft ein Head-up-Display für Fahrzeuge gemäß dem Oberbegriff des Anspruchs 1.

### Stand der Technik

Mit Head-up-Displays, im Folgenden auch abgekürzt HUD genannt, können Informationen eines Fahrzeugs über eine durchsichtige Scheibe in die Sicht eines Betrachters, insbesondere eines Fahrers, der durch die Scheibe blickt, eingeblendet werden. Dadurch können angezeigte Informationen des Fahrzeugs sowie beispielsweise eine vor einem Fahrzeug gegebene Verkehrssituation gleichzeitig auf einen Blick wahrgenommen werden. Aufgrund der Vorteile dieser Anzeigevorrichtung sind inzwischen einige unterschiedliche Ausführungen von Head-up-Displays bekannt.

Mit Head-up-Displays können Informationen als virtuelle Bilder dargestellt werden. Dabei erscheint einem Betrachter die angezeigte Information als Bild, das sich scheinbar außerhalb des Fahrzeugs befindet. Der zusätzliche Vorteil dieser Darstellungsweise besteht darin, dass den Augen eines Betrachters die Anstrengung erspart werden kann, sich zur Erkennung von Fahrzeuginformationen an Anzeigen der Instrumententafel zu adaptieren, deren Abstand gegenüber der äußeren Umgebung wesentlich geringer ist.

Allerdings ist mit dieser Anzeigetechnik die angezeigten Informationen gegebenenfalls nur in einem vergleichsweise kleinen Bereich von Blickwinkeln erkennbar sein. In Fahrzeugen wird der Blickwinkel vor allem von der Sitzposition eines Betrachters bestimmt. Daher schlägt die DE 10 2007 015 887 A1 vor, räumliche Einstellungen beispielsweise eines Sitzes, eines Lenkrads oder von Rückspiegeln über eine Schnittstelle eines Head-up-Displays zur erfassen, um anhand dieser Daten die Anzeige von Informationen an häufige Blickrichtungen anzupassen. Weil diese räumlichen Einstellungen, insbesondere beim Fahren, nur selten verändert werden, bleiben die angezeigten Informationen solcher Head-up-Displays bei den meisten Blickwinkeln kaum oder gar nicht erkennbar.

Die DE 10 2004 031 311 A1 stellt ein Head-up-Display mit einem integrierten Bildsensor vor, mit dem die Position des Kopfs eines Betrachters ermittelt wird. Durch die Integration des Bildsensors werden der Kopf und die Augen eines Betrachters vorteilhaft vom gleichen räumlichen Bezugspunkt aus aufgenommen, an dem sich die Ausrichtung der Informationsanzeige orientiert. Durch ungünstige Lichtverhältnisse kann jedoch bei dieser Ausführung zeitweise eine Erkennung einer Blickrichtung gestört und eine Anpassung einer Informationsanzeige an eine veränderte Blickrichtung verhindert sein.

Aus der DE 10 2004 031311 A1 ist eine Vorrichtung zur Darstellung von Informationen auf einer Projektionsfläche bekannt, insbesondere auf einer Windschutzscheibe eines Kraftfahrzeugs. Das Bild einer Bildquelle kann an veränderbaren Positionen auf die Projektionsfläche projiziert werden. Zur blickrichtungsabhängigen Positionierung des Bildes ist eine Einrichtung zur Blickrichtungserkennung eines Benutzers vorgesehen, die einen Bildsensor und ein optisches System zum Abbilden der Pupille des Benutzers auf dem Bildsensor umfasst. Eine Beleuchtung des Benutzers erfolgt bspw. über eine Infrarot-Lichtquelle.

Aus der US 2003/0123027A1 ist ein System zur Verfolgung einer Augenposition bekannt, bei der Referenzpunkte in einer Umgebung einer Anzeigefläche durch einzelne Lichtquellen erzeugt werden und das sich auf der Hornhaut des Betrachters spiegelnde Bild erfasst und ausgewertet wird.

### Offenbarung der Erfindung

Mit einem Head-up-Display mit den Merkmalen des Anspruchs 1 wird erreicht, ein Head-up-Display bereitzustellen, dessen Anzeige unter wechselnden Fahr- und Umgebungsbedingungen und unter verschiedenen Blickwinkeln eines Betrachters eine verbesserte Erkennbarkeit gewährleistet. Vorteilhafte Ausbildungen und Verbesserungen des erfindungsgemäßen Head-up-Displays ergeben sich aus den abhängigen Ansprüchen.

Die Erfindung geht aus von einem Head-up-Display für Fahrzeuge, das zur Anzeige von Informationen mittels einer Bildgebungseinheit eine durchsichtige Fläche im Fahrzeug in Blickrichtung eines Betrachters als Anzeigebereich verwendet, wobei zwischen der Bildgebungseinheit und dem Anzeigebereich eine Abbildungsoptik angeordnet ist, mit Anpassungsmitteln, mit denen eine Anzeige von Informationen an verschiedene Augenpositionen des Betrachters angepasst werden kann, mit einer Kamera zur Aufnahme des Kopfes des Betrachters und mit einer Bildverarbeitungseinheit zur Auswertung von Aufnahmen der Kamera. Der Kern der Erfindung besteht darin, dass Projektionsmittel dazu vorgesehen sind, eine optisch erfassbare Marke in Richtung des Kopfes des Betrachters abzubilden, und dass die Bildverarbeitungseinheit dazu ausgebildet ist, auf der Grundlage einer Aufnahme der Kamera eine Marke auszuwerten.

Die Bildgebungseinheit wandelt Informationen beispielsweise des Fahrzeugs, z. B. Fahrtgeschwindigkeit oder z. B. Motordrehzahl, für eine Anzeige in ein Bündel von Lichtstrahlen um, das mit Hilfe der Abbildungsoptik fokussiert auf eine durchsichtige und reflektierende Fläche, beispielsweise eine Fensterscheibe oder eine separate Kombinatorscheibe, gerichtet ist. Von dort wird das abbildende Lichtbündel in Richtung der Augen eines Betrachters gespiegelt. Um die Anzeige von Informationen an verschiedene Augenpositionen eines Betrachters anpassen zu können, ist das Head-up-Display mit Anpassungsmitteln wie z. B. steuerbaren, beweglichen Lagerungen für optische Elemente der Abbildungsoptik und/oder z. B. elektrischen Antrieben ausgestattet.

Die Kamera kann beispielsweise eine elektronische Digitalkamera bzw. eine Videokamera sein. Sie kann dazu ausgebildet sein, Aufnahmen mit z. B. verschiedenen Bildausschnitten (Zoomeinstellungen) und/oder in z. B. verschiedene Richtungen aufzunehmen.

Die Bildverarbeitungseinheit ist dazu vorgesehen, Bildaufnahmen der Kamera auszuwerten. Vorzugsweise ist die Bildverarbeitungseinheit dazu ausgebildet, anhand von Konturen bzw. anderen optischen Merkmalen verschiedene Bildelemente voneinander zu unterscheiden und vorgegebene Objekte, insbesondere den Kopf bzw. die Augen eines Betrachters, in unterschiedlichen räumlichen Positionen und Orientierungen zu erkennen.

Die Projektionsmittel umfassen eine Lichtquelle und Mittel zur Erzeugung einer Marke, die als Bild auf Objekte projiziert werden kann, wie z. B. eine Blende, ein Display oder die Lichtquelle, z. B. eine Laserdiode, selbst. Die Projektionsmittel können derart geschaffen sein, dass sie z. B. eine einzige zusammenhängende Marke abbilden. Dadurch kann eine Marke eine Form besitzen, die auch dann noch von einer Bildverarbeitungseinheit erkennbar ist, wenn in einer Kameraaufnahme ein Teil der Marke verzerrt oder gar nicht erfasst ist. Andererseits können die Projektionsmittel derart geschaffen sein, dass sie z. B. mehrere einzelne Marken, die in einem vorgegebenen Muster zueinander angeordnet sind, abbilden. Dies bietet den Vorteil, dass insbesondere bei vergleichsweise kleinen Marken Verzerrungen beispielsweise durch Formen von Gesichtskonturen in einer Kameraaufnahme relativ wenig in Erscheinung treten. Ein weiterer Vorteil bei Einsatz mehrerer Marken liegt darin, dass die Marken mit divergierenden oder konvergierenden Strahlen in Richtung des Kopfes eines Betrachters projiziert werden können, sodass anhand des Abstands der Marken in einer Aufnahme ein Abstand beispielsweise zu einer Basislinie, von der aus das abbildende Licht in Richtung des Kopfes abstrahlt, ermittelbar ist.

Ein Teil der Projektionsmittel können optische Elemente sein, um projizierte Marken zu fokussieren und den Strahlengang ihres Lichts in Richtung des Kopfes eines Betrachters anzupassen. Vorzugsweise weisen die Projektionsmittel eine von der Bildgebungseinheit des Head-up-Displays unabhängige Lichtquelle auf, damit vorteilhaft eine Projektion einer Marke und eine Anzeige von Informationen unabhängig voneinander ausführbar sind.

Vorzugsweise sind die Projektionsmittel in einer Weise ausgebildet, dass die Marke hinsichtlich der Form, der Wellenlänge bzw. der Intensität des abbildenden Lichts hervortretend gestaltet ist. Dies bietet den Vorteil, dass die Marke zuverlässig optisch erkennbar und von anderen Objekten unterscheidbar ist, die in einer Projektionsrichtung, einer Aufnahmerichtung bzw. einem Bildausschnitt der Kamera liegen können. Die Projektionsmittel können dazu vorgesehen sein, mit einer Marke einen bestimmten Bereich am Kopf des Betrachters, insbesondere an dessen Gesicht, zu markieren. Hierdurch ist eine Marke, insbesondere an flächigen Bereichen eines Gesichts, vergleichsweise leicht erkennbar. Für die Projektion einer Marke können die Projektionsmittel auch derart geschaffen sein, dass eine Marke beispielsweise einen Rahmen, z. B. als Rechteck, um den Kopf eines Betrachters bildet. Dabei kann eine rahmenförmige Marke den Kopf z. B. in einer Weise umgeben, dass Licht der Marke erst dann vom Kopf des Betrachters zur Kamera reflektiert wird, wenn der Kopf aus einem vorgegebenen Bereich bewegt wird. Dadurch können vorteilhaft Bewegungen des Betrachters erkannt werden, bei denen dessen Kopf beispielsweise einen Bereich, der eine günstige Augenposition zur Erkennung der Anzeige des Head-up-Displays bietet, verlässt.

Die erfindungsgemäße Markenprojektion bietet den Vorteil, dass eine Kamera mit einer Aufnahme des Kopfes eines Betrachters anhand der projizierten Marke ein Objekt erfassen kann, das einen Bezug zu einer räumlichen Position oder einer räumlichen Richtung herstellt. Mit einer auffälligen Erscheinung können die projizierten Marken beispielsweise einen bevorzugten Ausgangspunkt für Auswertungen von Aufnahmen durch die Bildverarbeitungseinheit bilden, indem sie z. B. eine vergleichsweise häufig eingenommene Position der Augen markieren. Dadurch lässt sich die Auswertung von Kameraaufnahmen durch die Bildverarbeitungseinheit vorteilhaft beschleunigen.

Bei einer bevorzugten Ausführung der Erfindung ist die Bildverarbeitungseinheit dazu ausgebildet, anhand einer Aufnahme der Kamera eine Abweichung einer Position eines Bereichs am Kopf des Betrachters, insbesondere der Augen, gegenüber einer Position einer optisch erfassbaren Marke am Kopf des Betrachters zu bestimmen, und insbesondere, anhand der Abweichung Einstellgrößen für die Anpassungsmittel bereitzustellen. Dadurch bietet ein erfindungsgemäßes Head-up-Display den Vorteil, dass durch Auswertung von Kameraaufnahmen wesentliche Informationen zur Anpassung einer Anzeige verfügbar sind und für eine Automatisierung der Anpassung bereitstehen.

Vorzugsweise ist die Erfindung in der Weise ausgeführt, dass die Kamera außerhalb eines Teils des Head-up-Displays, in dem die Bildgebungseinheit und die Abbildungsoptik untergebracht sind, positioniert ist. Dies bietet den Vorteil, dass Aufnahmen der Kamera weniger durch Lichtquellen des Head-up-Displays oder durch Umgebungslicht am Einbauort eines Head-up-Displays beeinträchtigt werden können.

Ferner ist es vorteilhaft, dass die Projektionsmittel Einstellmittel umfassen, mit denen mindestens ein optisches Element der Projektionsmittel derart einstellbar ist, dass eine optisch erfassbare Marke an verschiedenen Positionen abgebildet werden kann. Dadurch lässt sich z. B. die Projektionsrichtung optisch erfassbarer Marken anpassen, wenn ein Betrachter seinen Kopf so weit zur Seite neigt, dass optische Marken von keiner Stelle seines Kopfes mehr reflektiert werden.

Kameras und Bildverarbeitungssysteme bieten inzwischen eine ausreichende Verarbeitungsgeschwindigkeit, um Bewegungen z. B. von Personen in Echtzeit zu verfolgen. Daher ist es bei Verwendung solcher Komponenten besonders vorteilhaft, wenn die Einstellmittel dazu ausgebildet sind, die Position einer optisch erfassbaren Marke den Bewegungen des Kopfes des Betrachters entsprechend mitzuführen. Hierbei können die Einstellmittel beispielsweise Einstellgrößen, die die Bildverarbeitungseinheit den Anpassungsmitteln der Abbildungsoptik bereitstellt, mitverwenden.

Für eine vorteilhaft kompakte Bauweise eines erfindungsgemäßen Head-up-Displays ist es bevorzugt, dass mindestens ein Element der Projektionsmittel ein optisches Element der Abbildungsoptik ist. Insbesondere wenn mindestens eines der gemeinsamen optischen Elemente der Abbildungsoptik zur Anpassung an Positionen der Augen des Betrachters einstellbar ist, ist eine vorteilhafte Kopplung der Projektion von Marken an Anpassungen der Anzeige des Head-up-Displays an Augenpositionen des Betrachters möglich. Zudem gestattet dies eine weitere Platz- und Kostenersparnis, da es gegebenenfalls genügt, nur ein optisches Element mit Einstellmitteln zu versehen.

Eine besonders bevorzugte Ausführung der Erfindung sieht vor, dass die Projektionsmittel dazu ausgebildet sind, eine optisch erfassbare Marke durch Reflexion an der durchsichtigen Scheibe im Fahrzeug in Richtung des Kopfes eines Betrachters zu projizieren. So kann vorteilhaft das Licht zur Markenprojektion beispielsweise im Wesentlichen aus der gleichen Richtung wie das Licht der HUD-Anzeige auf den Kopf des Betrachters gerichtet werden. Hierzu ist es besonders bevorzugt, wenn ein Einkopplungselement, beispielsweise ein Spiegel, der Projektionsmittel dazu ausgebildet ist, Licht optisch erfassbarer Marken in einen Abschnitt des Strahlengangs der Abbildungsoptik einzukoppeln. Denn hierdurch, insbesondere bei Abbildung über eine durchsichtige Scheibe im Fahrzeug, lassen sich vorteilhaft Lichtbündel der HUD-Anzeige und der Markenprojektion näherungsweise oder vollständig parallel in Richtung des Kopfes und der Augen eines Betrachters führen. Insbesondere können optisch erfassbare Marken dabei vorteilhaft Hinweise geben, für welche Position des Kopfes, insbesondere der Augen, die Anzeige von Informationen, insbesondere die Anpassungsmittel, des Head-up-Displays gerade eingestellt ist.

Die Projektionsmittel sind vorzugsweise innerhalb eines Teils des Head-up-Displays angeordnet, in dem die Bildgebungseinheit und/oder die Abbildungsoptik untergebracht sind. Dies begünstigt eine kompakte Bauweise eines erfindungsgemäßen Head-up-Displays mit gemeinsamer Nutzung optischer Elemente für die Abbildung von Informationsanzeigen und die Projektion von optisch erfassbaren Marken.

Eine weitere bevorzugte Ausführung besteht darin, dass ein Teil der Projektionsmittel, insbesondere ein lichtabstrahlender Teil, in die Bildgebungseinheit integriert ist. Dies bietet die Möglichkeit, das Licht beider Abbildungen, der Anzeige und der Markenprojektion, überwiegend bzw. nur über gemeinsam verwendete optische Elemente und somit einen im Wesentlichen gemeinsamen Strahlengang zu leiten. Dies verringert die Anzahl erforderlicher Komponenten und den Platzbedarf eines erfindungsgemäßen Head-up-Displays. Aufgrund der räumlichen Nähe lassen sich die z. B. verschiedenen Lichtquellen für die Anzeige und für die Projektion mit geringerem Aufwand und vergleichsweise effizienter kühlen.

Vorzugsweise sind die Projektionsmittel dazu ausgebildet, eine optisch erfassbare Marke fortlaufend periodisch über eine vorgegebene Dauer zu projizieren. Insbesondere ist es bevorzugt, dass die periodische, zeitweise Projektion einer optisch erfassbaren Marke auf ein Signal, insbesondere der Kamera, synchronisiert ist. Dadurch stehen der Bildverarbeitungseinheit Aufnahmen sowohl mit als auch ohne projizierte Marken zur Verfügung, durch deren Vergleich die Bildverarbeitungseinheit Positionen bzw. Projektionsrichtungen von Marken vergleichsweise leichter und schneller bestimmen kann. Insbesondere sind auf diese Weise die Positionen von Marken, deren Projektion den Bewegungen des Betrachters mitgeführt ist, effizient erfassbar.

Eine besonders bevorzugte Ausführung der Erfindung sieht vor, dass die Mittel zur Projektion einer optisch erfassbaren Marke dazu ausgebildet sind, nicht sichtbares, insbesondere infrarotes Licht abzustrahlen. Hierdurch wird vorteilhaft die visuelle Wahrnehmung des Betrachters durch die Projektion einer Marke vergleichsweise wenig bzw. gar nicht beeinträchtigt. Vorzugsweise ist das Einkopplungselement der Projektionsmittel ein Spiegel, der für infrarotes Licht transparent ist. Damit kann vorteilhaft infrarotes Licht zur Projektion von Marken z. B. parallel zum Licht für Informationsanzeigen des HUDs in einen Strahlengang derAbbildungsoptik eingekoppelt werden.

Ferner ist es bevorzugt, dass die Mittel zur Projektion einer optisch erfassbaren Marke dazu ausgebildet sind, sichtbares Licht abzustrahlen. Hierdurch kann beispielsweise ein Betrachter vorteilhaft eine Position einer z. B. an seinen Kopf projizierten Marke mit Hilfe z. B. eines Spiegels überprüfen ohne dafür z. B. elektronische Hilfsmittel zu benötigen.

Vorzugsweise sind die Projektionsmittel derart einstellbar, dass eine optisch erfassbare Markierung hinsichtlich der Größe und/oder der Form und/oder der Intensität veränderbar ist. Dies bietet den Vorteil, dass eine erfindungsgemäße Projektion einer Marke z. B. an verschiedene Betrachter bzw. an z. B. verschiedene Lichtverhältnisse anpassbar ist. Weiterhin ist es bevorzugt, dass das Head-up-Display dazu ausgebildet ist, eine Position der Augen und/oder eine Position der Markierung einem Betrachter anzuzeigen. Dazu kann das Head-up-Display beispielsweise eine Aufnahme des Kopfs des Betrachters mit einer projizierten Marke anzeigen. Damit ermöglicht ein erfindungsgemäßes Head-up-Display auf vorteilhafte Weise, dass ein Betrachter Einstellungen der Projektionsmittel insbesondere anhand einer Projektion einer Marke mit sichtbarem Licht überprüfen kann.

Weiterhin ist es bevorzugt, dass ein Projektionsflächenelement vorgesehen ist, das mit Befestigungsmitteln für eine Befestigung an einem Sitz des Betrachters, insbesondere an einer Kopfstütze des Sitzes, ausgestattet ist. Insbesondere ist es bevorzugt, dass das Projektionsflächenelement mit Messmitteln für eine wiederholbare Positionierung an einem Sitz, insbesondere an einer Kopfstütze des Sitzes, ausgestattet ist. Das Projektionsflächenelement kann z. B. eine ebene Fläche sein oder z. B. andeutungsweise der Form eines Gesichts entsprechend. Die Messmittel können z. B. als Libelle und/oder z. B. als Messskala an einem Befestigungselement ausgebildet sein. Mit einem solchen Projektionsflächenelement kann beispielsweise die Position optisch erfassbarer Marken überprüft werden. Insbesondere mit Hilfe der Messmittel ist es vorteilhaft möglich, auf einen Betrachter, z. B. einen Fahrer, abgestimmte Parameter der Projektionsmittel, der Einstellmittel und/oder der Anpassungsmittel vergleichsweise genau zu erfassen. Dadurch kann ein erfindungsgemäßes HUD z. B. bereits werkseitig auf die Körpermaße eines Betrachters vorteilhaft abgestimmt werden. Ebenso ermöglicht das Projektionsflächenelement z. B. in einer Werkstatt einen Ein- und Ausbau bzw. einen Austausch von Komponenten des HUD, wobei Abstimmungen des HUDs auf einen Betrachter mit Hilfe des Projeketionsflächenelements, insbesondere mit dessen Messmitteln, vorteilhaft schnell wiederherstellbar sind.

Eine besonders bevorzugte Ausbildung der Erfindung sieht vor, dass die Bildverarbeitungseinrichtung dazu ausgebildet ist, anhand einer Kameraaufnahme einer Marke am Projektionsflächenelement geometrische Verzerrungen zu erkennen und Korrekturparameter für die Bildgebungseinheit und/oder die Anpassungsmittel der Abbildungsoptik bereitzustellen. Insbesondere wenn das Licht optisch erfassbarer Marken die Abbildungsoptik teilweise oder vollständig durchläuft, wirken sich Abbildungsfehler der Abbildungsoptik für die Informationsanzeige des HUDs auch auf die Form projizierter Marken aus. Beispielsweise durch Vergleich mit einer vorgegebenen Form einer Marke kann eine Bildverarbeitungseinheit aus einer Kameraaufnahme einer Marke Verzerrungen erkennen und daraus Korrekturparameter bestimmen, mit denen die Bildgebungseinheit bzw. die Anpassungsmittel der Abbildungsoptik Verzerrungen zumindest an angezeigten Informationen vorteilhaft entgegenwirken können. Dabei kann das HUD dazu ausgebildet sein, dass ein solcher Abstimmungsvorgang zur Verringerung bzw. Beseitigung von Bildverzerrungen nach einer Anbringung und Justierung der Projektionsfläche im wesentlichen ohne manuellen Eingriff durchführbar ist.

Weitere Einzelheiten und Vorteile der Erfindung werden nachfolgend anhand der Zeichnungen beschrieben und erläutert.

Übereinstimmende Elemente werden in allen Figuren einheitlich mit den gleichen Bezugszeichen versehen.

Es zeigen:
- Figur 1: vertikale Schnittansicht parallel zur Fahrzeuglängsachse durch ein Head-up-Display nach dem Stand der Technik in einem Fahrzeug in schematischer Darstellung;
- Figur 2: schematische Schnittansicht eines erfindungsgemäßen Head-up-Displays;
- Figur 3: schematische Darstellung einer Marke, die an den Kopf eines Fahrers projiziert ist;
- Figur 4: schematische Darstellung einer zweiten Ausführung eines erfindungsgemäßen Head-up-Displays;
- Figur 5: schematische Darstellung eines Head-up-Displays mit Kalibrierschirm;
- Figuren 6a-d: Bild einer projizierten Marke mit verschiedenen optischen Verzerrungen.

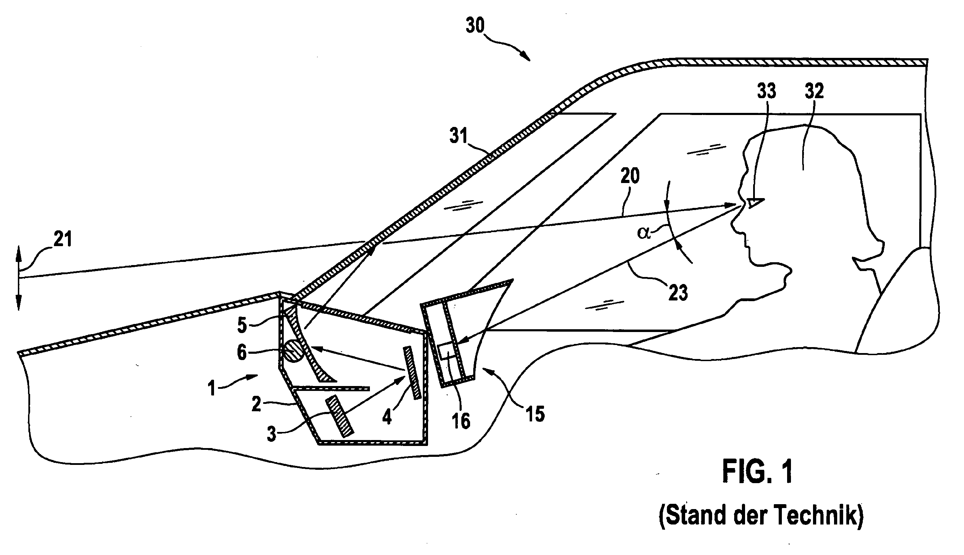

In Figur 1 ist ein Schnitt durch ein Head-up-Display 1, das dem Stand der Technik entspricht, mit umgebenden Teilen eines PKWs 30 schematisch dargestellt. Als Betrachter des HUDs 1 ist eine Fahrerin 32 dargestellt. Wesentliche Teile des HUDs 1, beispielsweise ein Display 3, optische Elemente 4, 5 sowie eine Verstelleinheit 6 sind in einem Gehäuse 2, unterhalb einer Frontscheibe 31 eines Pkws 30 angeordnet.

Als Bilderzeugungseinheit stellt das Display 3 Informationen bildhaft dar und strahlt das Licht eines abbildenden Strahlenbündels in eine Abbildungsoptik ein, die beispielhaft anhand zweier optischer Elemente 4 und 5 dargestellt ist. Um eine möglichst raumsparende Bauweise zu erreichen, werden zwar vorzugsweise Spiegel eingesetzt, doch kann die Abbildungsoptik auch Linsen, Prismen, Filter und Elemente mit kombinierten oder weiteren optischen Wirkungen enthalten. Das vom Display 3 abgestrahlte Licht folgt einem durch die Abbildungsoptik 4, 5 bestimmten Strahlengang 20, sodass das Licht der Informationsanzeige schließlich durch Reflexion an der Frontscheibe 31 die Augen 33 der Fahrerin 32 erreicht.

Die Abbildungsoptik 4, 5 fokussiert eine Abbildung anzuzeigender Informationen dabei in einer Weise, dass die Fahrerin 32 Informationen beim Blick durch die Frontscheibe 31 als virtuelle Bilder in einer virtuellen Bildebene 21 mit vorgegebenem Abstand wahrnehmen kann. Für die Fahrerin 32 scheint sich die Informationsanzeige daher außerhalb des Fahrzeugs 30 vor der Frontscheibe 31 zu befinden. Eine optimale, insbesondere scharfe, Erkennung der Informationsanzeige erfordert eine Adaption der Augen 33 der Fahrerin 32 an den Abstand der virtuellen Bildebene 21. Vorzugsweise liegt die virtuelle Bildebene 21 einer Anzeige in einem Abstand, bei dem ein Blickwechsel zwischen Objekten einer realen Umgebung und Objekten eines virtuellen Bildes einer Informationsanzeige von den Augen 33 schnell und ohne Anstrengung vollziehbar ist. Unterstützend kann das HUD 1 eine Möglichkeit bieten, den Abstand der virtuellen Bildebene 21 über die Abbildungsoptik 4, 5 einzustellen.

Durch die fokussierte Abbildung von Informationen als virtuelle Bilder an der Bildebene 21 sind Informationsanzeigen für die Fahrerin 32 nur in einem vergleichsweise engen Bereich von Blickwinkeln erkennbar. Daher verfügt das HUD 1 über ein optisches Element 5, das mit Hilfe einer elektrischen Verstelleinheit 6 für verschiedene Blickwinkel horizontal und vertikal einstellbar ist. Für diesen Zweck steht dem Display 1 eine Kamera 16, die in einem Kombi-Instrument 15 untergebracht ist, zur Verfügung. Mit einer Bildauswertungseinheit (nicht dargestellt) kann anhand von Aufnahmen der Kamera die Position des Kopfes der Fahrerin 32 verfolgt werden.

Eine Aufnahme der Kamera 16 kann zwar einen Hinweis auf die Position des Kopfes einer Fahrerin 32 liefern. Um eine Veränderung einer Position des Kopfes festzustellen, kann eine Bildverarbeitungseinheit Positionsdaten, die aus einer Aufnahme ermittelt wurden, in ein einheitliches, z. B. durch eine Kalibrierung vorgegebenes Koordinatensystem umrechnen und mit zuvor berechneten Daten vergleichen. Sie kann für den gleichen Zweck auch zumindest zwei Aufnahmen miteinander vergleichen. Dabei wächst der Auswertungsaufwand für eine Bildverarbeitungseinheit zusätzlich an, wenn die Kamera Bereiche, die den Kopf umgeben, in unterschiedlichen Vergrößerungen und/oder aus unterschiedlichen Aufnahmewinkeln erfasst.

Die Figur 1 zeigt, dass das Licht 20 der HUD-Anzeige aus einer Richtung am Auge der Betrachterin eintrifft, während die Kamera den Kopf der Betrachterin aus einer zweiten Richtung 23, die um einen Winkel α von der ersten Richtung abweicht, aufnehmen kann. Eine Aufnahme der Kamera liefert alleine einem Bildverarbeitungssystem kaum genug Informationen, um daraus Parameter für eine optimale Ausrichtung der HUD-Anzeige zu gewinnen. Aufgrund der unterschiedlichen Positionen und Ausrichtungen benötigt eine Auswertung einer Kamera-Aufnahme umfangreiche Berechnungen, die wiederum von der Genauigkeit der Vermessung der Lage Kamera und der Abbildungsoptik des HUDs abhängen.

Zusätzlich können wechselnde Lichtverhältnisse eine Auswertung von Kameraaufnahmen erschweren. Daher muss eine Bildverarbeitungseinheit für eine zuverlässige Auswertung der Kameraaufnahmen vergleichsweise aufwendige Verfahren für eine zuverlässige Auswertung der Kameraaufnahmen einsetzen, die eine Verfolgungsgeschwindigkeit der Blickrichtung eines Betrachters und damit eine Anpassungsgeschwindigkeit einer Informationsanzeige begrenzt.

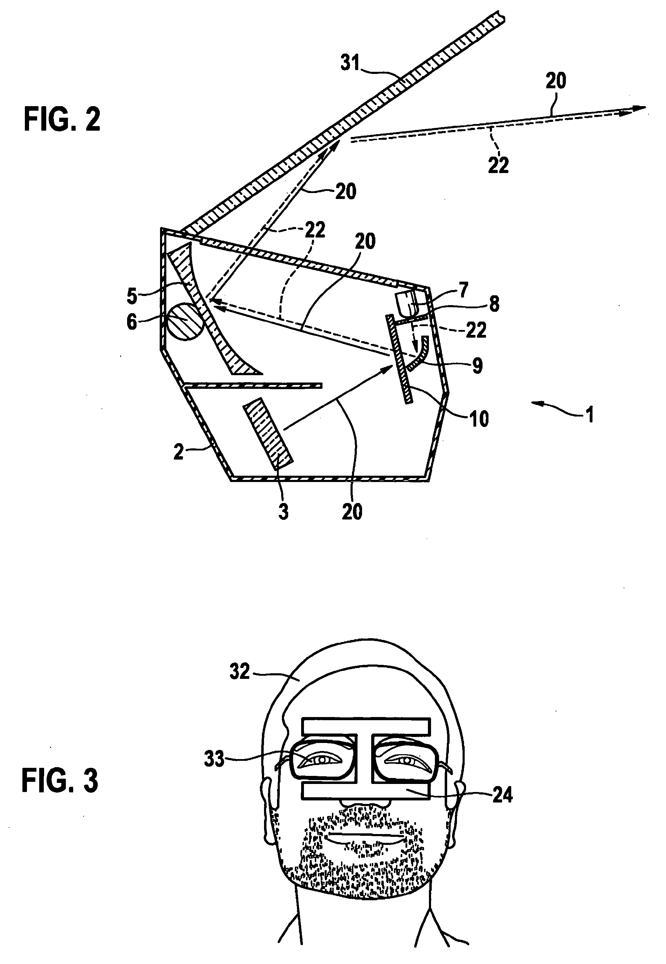

Eine erste Ausführung eines erfindungsgemäßen Head-up-Displays (HUD) 1 ist in Figur 2 zusammen mit einer zur Anzeige mitverwendeten Frontscheibe 31 dargestellt. Für eine Anzeige von Informationen als virtuelle Bilder ist das HUD 1 ähnlich dem zuvor beschriebenen HUD nach Stand der Technik (Figur 1) aufgebaut. Von diesem unterscheidet sich das erfindungsgemäße HUD 1 (Figur 2) im Wesentlichen durch Projektionsmittel 7, 8, 9, 10 für eine Markenprojektion, die in einem folgenden Abschnitt näher beschrieben werden.

Ein elektronisches Display 3, das z. B. ein kleines TFT-Display mit Hintergrundbeleuchtung sein kann, setzt die anzuzeigenden Informationen in ein Strahlenbündel um, dessen Strahlengang beispielhaft anhand eines Lichtstrahls 20 dargestellt ist. Eine Abbildungsoptik, die in Figur 2 mittels optischer Elemente 5 und 10 skizziert ist, führt das abbildende Licht entlang des Strahlengangs 20 zu einer Frontscheibe 31 und von dort durch Spiegelung an der Frontscheibe 31 in Richtung der Augen eines Fahrers. Zur Anpassung einer Informationsanzeige an unterschiedliche Blickwinkel, aus denen der Anzeigebereich an der Frontscheibe betrachtet werden kann, ist am einstellbaren Spiegel 5 eine z. B. elektrische Verstelleinheit 6 angebracht, mit der der Spiegel 5 in horizontaler und vertikaler Richtung einstellbar ist. Das HUD 1 kann weitere optische Elemente und Anpassungsmittel besitzen, die in Figur 2 nicht dargestellt sind.

Erfindungsgemäß ist das HUD 1 mit Projektionsmitteln 7, 8, 9, 10 ausgestattet, um über die Frontscheibe 31 eine Marke in Richtung des Kopfes eines Betrachters zu projizieren. Weil auch der Strahlengang 20 zur Anzeige von Informationen dorthin gerichtet ist, können mit einer Unterbringung der Projektionsmittel 7, 8, 9, 10 im Gehäuse 2 des HUDs 1 vorteilhaft optische Elemente eingespart werden, indem für die Projektion Abschnitte des Strahlengangs 20 für eine Informationsanzeige mitgenutzt werden. Eine raumsparende Bauweise ist ein weiterer Vorteil dieser Lösung.

Zur Erzeugung von Marken ist nach einer Infrarot(IR)-Leuchtdiode 7 eine Blende 8 angeordnet, die die geometrische Form einer einzelnen, zusammenhängenden Marke bestimmt. Ein fokussierender Spiegel 9 lenkt das Licht des abbildenden Strahlenbündels 22 von Marken auf einen für IR-Licht durchlässigen Einkopplungsspiegel 10, der das sichtbare Licht für eine Informationsanzeige auf den einstellbaren Spiegel 5 umlenkt. Zwischen der IR-Leuchtdiode 7 und dem Einkopplungsspiegel 10 können weitere optische Elemente (nicht dargestellt) angeordnet sein.

Die Blende 8 ist in einer Weise geformt, dass Marken symmetrisch beide Augen zumindest teilweise umrahmen. Somit fällt bei günstiger Einstellung des Spiegels 5 kein Licht der Markenprojektion in die Augen des Betrachters. Falls aufgrund einer Bewegung des Kopfs des Betrachters dennoch Licht der Markenprojektion in dessen Augen fällt, ruft dies jedoch wegen der Unsichtbarkeit des Infrarotlichts keine störenden Lichtwahrnehmungen hervor. Die symmetrisch zu beiden Augen gestaltete Form der Marken hat zudem den Vorteil, dass die Strahlenbündel 20 und 22 parallel geführt werden können. Hinsichtlich der Fokussierung hat in gemeinsamen Abschnitten der Strahlengänge 20, 22 die Abbildung der Informationsanzeige Vorrang, weshalb z. B. der Spiegel 9 dafür vorgesehen ist, die Markenprojektion im Bereich der Augenpartie eines Betrachters zu fokussieren. Diese von der Anzeige des HUD getrennte Fokussierung der Markenprojektion ist erforderlich, weil sich die Bildebenen für Informationsanzeigen und für Marken in unterschiedlichen Abständen befinden. Dennoch können die Elemente der Abbildungsoptik, wie z. B. die optischen Elemente 5 und 10, den Spiegel 9 bei der Fokussierung unterstützen. Dies ermöglicht eine vergleichsweise einfachere Form, insbesondere mit geringerer Größe, und Herstellung des Spiegels 9 und kann den Einsatz zusätzlicher optischer Elemente erübrigen.

Die Abbildung sowohl der Informationsanzeige als auch der Markenprojektion ist durch die gemeinsam verwendeten optischen Elemente 5 und 10 gekoppelt. Durch die 2-achsige Verstelleinheit 6 und den Spiegel 5 kann der Strahlengang 20 der HUD-Anzeige an eine aktuelle Position des Kopfs, insbesondere der Augen, eines Betrachters angepasst werden. Wenn der Strahlengang 22 der Markenprojektion im Bereich der Abbildungsoptik im wesentlichen parallel zum Strahlengang 20 verläuft, kann das Licht des Strahlengangs 22, also der Markenprojektion, mit einer Anpassung der HUD-Anzeige durch die Verstelleinheit 6 und den Spiegel 5 gleichzeitig mitgeführt werden. Dadurch kann gewährleistet werden, dass mit einer Anpassung der Informationsanzeige des HUDs an eine veränderte Augenposition immer zugleich die Position projizierter Marken derart verändert wird, dass die Kamera 16 projizierte Marken meist am Kopf und insbesondere in Augennähe aufnimmt. Dabei ist es besonders vorteilhaft, dass unter solchen Bedingungen Aufnahmen der Kamera, die sowohl eine projizierte Marke als auch die Augen eines Betrachters erfassen, unmittelbar wiedergeben, in welchem Maß eine Einstellung der Anzeige des HUDs von einer Augenposition abweicht. Mit vergleichsweise wenigen zusätzlichen Daten kann eine Bildverarbeitungseinheit aus solchen Kameraaufnahmen Einstellparameter ermitteln, mit denen die Verstelleinheit 6 und der Spiegel 5 an veränderte Augenpositionen angepasst werden können. Eine solche Ausführung eines erfindungsgemäßen HUDs bietet durch die Kopplung von HUD-Anzeige und Markenprojektion den Vorteil, dass über die Kamera 6 und eine Bildverarbeitungseinheit (nicht gezeigt) eine durch Rückkopplung geregelte Anpassung der Anzeige an Änderungen der Augenposition eines Betrachters möglich ist. Eine Aufnahme der Kamera kann als Sollgröße die Position der Augen des Betrachters und als Istgröße die Position einer projizierten Marke enthalten. Durch eine schnelle Auswertung solcher Informationen durch die Bildverarbeitungseinheit und eine schnelle Übermittlung des Auswertungsergebnisses an die Verstelleinheit 6 kann auf diese Weise vorteilhaft erreicht werden, dass sich die Anzeige HUD mit geringer oder keiner erkennbaren Verzögerung an die Position der Augen eines Betrachters anpasst und vom HUD angezeigte Informationen für den Betrachter fast immer in bestmöglicher Qualität sichtbar sind.

Wenn kein Teil einer Marke mehr vom Kopf eines Betrachters reflektiert wird, kann gegebenenfalls durch Wahl eines geeigneten, z. B. größeren Bildausschnitts sowohl Marke als auch Kopfposition aus einer einzigen Aufnahme ermittelbar sein und eine vergleichsweise schnelle Bestimmung eines Korrekturwerts aus einer Aufnahme ermöglichen. Durch Änderung der Intensität der IR-Leuchtdiode 7 kann die Projektion an unterschiedliche Lichtverhältnisse, z. B. entsprechend der Tageszeit, der Wetterverhältnisse oder z. B. der Umgebung angepasst werden. Dies erhöht die Zuverlässigkeit der Wahrnehmbarkeit des HUDs.

In HUDs ist es bisher üblich, den Spiegel 5 hinreichend groß zu wählen, um über dessen Fläche und Krümmung zu gewährleisten, dass eine Anzeige des HUDs von einem vorgegebenen Bereich von Augenpositionen, der so genannten Eyebox, aus genügend gut sichtbar ist. Dadurch ist es gegebenenfalls nötig, vergleichsweise große Spiegel mit entsprechend aufwändigen Halterungen und Einstellmitteln in HUDs einzubauen. Demgegenüber ist es mit einem erfindungsgemäßen HUD möglich, aufgrund der schnellen Nachführbarkeit mit einem vergleichsweise kleineren Spiegel eine zumindest ebenso gute Anzeigequalität zu erreichen, wobei durch einen kleineren Spiegel Kosten und Platzbedarf vorteilhaft verringert werden können.

Die Figur 3 zeigt schematisch ein Bild einer projizierten Marke 24, die die in Figur 2 dargestellte Blende 8 des HUDs 1 abbildet. Durch die gezeigte Form gelangt bei einer an eine Position eines Kopfes 32 angepassten Ausrichtung kein Licht der Markenprojektion in die Augen 33 des Betrachters 32. Die gezeigte Form der Marke 24 kann zudem anhand ihrer Symmetrie und ihrer abstrakten Gestaltung vorteilhaft an Konturen der Augenpartie und sogar einer Brille angepasst und ausgerichtet werden, sodass sie in Kameraaufnahmen für eine Bildverarbeitung vorteilhaft von anderen Konturen unterscheidbar und erkennbar ist. Die gezeigte Form ist zudem ein Beispiel für eine Form mit einem vergleichsweise leicht erkennbaren einzelnen Symmetriezentrum, sodass bereits bei Erkennung eines Teils einer Marke ein Bezugspunkt in einer Aufnahme durch eine Bildverarbeitung ermittelbar ist. Ein eindeutiges Symmetriezentrum als Bezugspunkt unterstützt eine zuverlässige und schnelle Bestimmung der Abweichung der Augen von einer projizierten Marke durch eine Bildverarbeitungseinheit.

Die in Figur 2 dargestellte IR-Leuchtdiode kann an ein Signal z. B. einer Kamera (nicht gezeigt) oder z. B. einer zusätzlichen Kontrolleinheit (nicht gezeigt) gekoppelt sein. Dadurch ist es möglich, mit einer Kamera abwechselnd Aufnahmen mit und ohne projizierte Marke zu erfassen. Eine solche Erfassung bietet den Vorteil, dass Marken durch Vergleich verschiedener Aufnahmen auch bei wechselnden Lichtverhältnissen zuverlässig erkennbar sind. Zudem ist mit Hilfe eines solchen Vergleichs vorteilhaft bestimmbar, ob z. B. die Lichtintensität der IR-Lichtdiode 7 für eine zuverlässige Erkennung ausreicht oder ob diese angepasst werden muss.

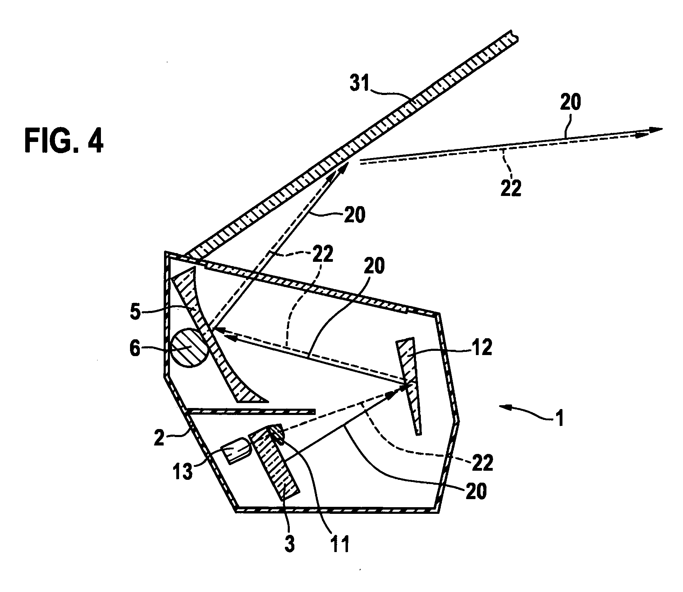

In Figur 4 ist ein zweites Ausführungsbeispiel für ein erfindungsgemäßes HUD 1 dargestellt. Da sein Aufbau in vielerlei Hinsicht Übereinstimmungen mit dem in Figur 2 dargestellten HUDs aufweist, wird im Folgenden nur auf die Unterschiede dieser Ausführung gegenüber der ersten eingegangen. Das in Figur 4 gezeigte HUD 1 unterscheidet sich durch die Erzeugung eines Bildes einer Marke. Es besitzt zwar ebenfalls ein TFT-Display 3 zur Erzeugung von Bildern, die Informationen anzeigen können. Allerdings ist an einer Stelle des Displays 3 eine Hintergrundbeleuchtung (nicht dargestellt), die im Wesentlichen sichtbares Licht abstrahlt, durch eine Infrarotbeleuchtung 13 ersetzt. Dies bietet den Vorteil, dass die Form einer projizierten Marke somit durch das TFT-Display 3 veränderbar bestimmt werden kann.

Abbildendes Licht 22 der Markenprojektion wird mit Hilfe einer Linse 11 fokussiert und trifft auf einen Spiegel 12, der sowohl das Licht 20 der Anzeige als auch das Licht 22 der Markenprojektion auf einen verstellbaren Spiegel 5 und von dort über eine Frontscheibe 31 in Richtung der Augen eines Betrachters reflektiert. Der Spiegel 12 ist dazu ausgebildet, das sichtbare Licht der Anzeige vor allem an der zugewandten Oberfläche zu reflektieren, durch die das Infrarotlicht im Wesentlichen hindurchtritt. An seiner Rückseite ist der Spiegel 12 derart beschichtet, dass er von dort einen überwiegenden Teil des Infrarotlichts reflektieren kann. Ein keilförmiger Querschnitt des Spiegels 12 bewirkt, dass die Lichtstrahlen der Markenprojektion 22 wie auch der sichtbaren Informationsanzeige 20 im Wesentlichen parallel ausgerichtet reflektiert werden. Hierdurch folgt das Licht beider Abbildungen dem gleichen Strahlengang. Dabei ist die Ausrichtung der optischen Abbildung sowohl der Informationsanzeige wie auch der Markenprojektion durch einen einstellbaren Spiegel 5 und eine elektrische Verstelleinheit 6 in der Weise gekoppelt, dass die Projektion von Marken veränderten Einstellungen der Anzeige von Informationen folgt.

Zusätzlich zu den für das erste Ausführungsbeispiel aufgeführten Vorteilen bietet das zweite Ausführungsbeispiel eines erfindungsgemäßen HUDs 1 den weiteren Vorteil, für die Unterbringung von Projektionsmitteln 11, 12, 13 vergleichsweise wenig zusätzlichen Platz zu benötigen.

Die beiden beschriebenen Ausführungsbeispiele erfindungsgemäßer HUDs ermöglichen durch ihre Projektionsmittel, dass Änderungen der Blickrichtung durch Auswertung von Kameraaufnahmen des Kopfs eines Betrachters gegenüber bisherigen Vorrichtungen schneller und zuverlässiger erkennbar sind. Dadurch können sie vorteilhaft eine automatisierte Erkennung der Augenposition, auch Eye-Tracking genannt, mit einem verbesserten Echtzeitverhalten unterstützen. Daher bieten erfindungsgemäße HUDs insbesondere den Vorteil, dass sie die Erkennbarkeit und Zuverlässigkeit einer Informationsanzeige in HUDs verbessern können, die sich während der Fahrt eines Fahrzeugs laufend an veränderte Blickrichtungen eines z. B. Fahrers anpassen.

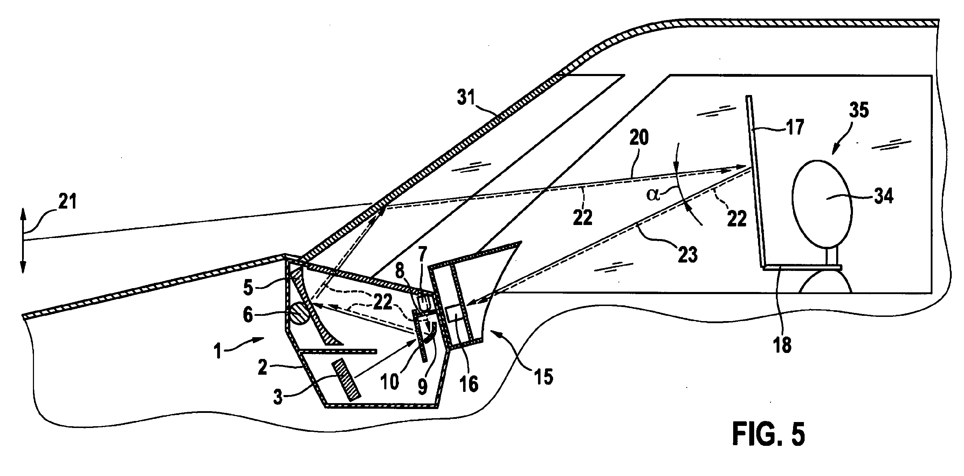

Die Figur 5 zeigt das erste Ausführungsbeispiel 1 eines erfindungsgemäßen HUDs in der Einbauumgebung eines Fahrzeugs, über dessen Frontscheibe 31 sowohl ein Strahlengang 20 einer Informationsanzeige als auch ein Strahlengang 22 einer Markenprojektion in Richtung eines Projektionsschirms 17 gerichtet sind. Der Projektionsschirm ist mit einer Befestigungsstrebe 18 an einer Kopfstütze 34 eines Fahrzeugsitzes 35 befestigt.

Der Projektionsschirm ist dazu vorgesehen, dass er in einer vorgegebenen und vergleichsweise leicht wiederholbaren Weise am Sitz angebracht werden kann. Hierfür kann er mit unterschiedlichen Messeinrichtungen wie z. B. Maßskalen und z. B. Libellen für eine genaue Bestimmung einer Anordnung des Projektionsschirms 17 ausgestattet sein.

Durch eine beispielsweise ebene Schirmfläche ist eine projizierte Marke ohne Verzerrungen durch den Projektionsschirm 17 abbildbar. Aufgrund der teilweise gemeinsamen Strahlführung 20,22 für Informationsanzeige und Markenprojektion in der Abbildungsoptik 5,10 des HUDs können durch eine Projektion z. B. mit sichtbarem Licht verschiedene Anpassungen z. B. bei der Endkontrolle in einem Automobilwerk oder z. B. in einer Werkstatt direkt visuell überprüft werden. Dies betrifft beispielsweise die Abstimmung der Markenprojektion und der Informationsanzeige auf Körpermaße und Sitzeinstellungen eines Betrachters.

Auch die Justierung der optischen Abbildungselemente, insbesondere bezüglich der Frontscheibe 31 und bezüglich der Position einer Kamera 16 kann mit Hilfe des Projektionsschirms überprüft werden. Mit Hilfe des Projektionsschirms 17 ist eine solche Justierung unter Verwendung der Kamera 16 und einer Bildverarbeitungseinheit (nicht gezeigt) automatisiert möglich.

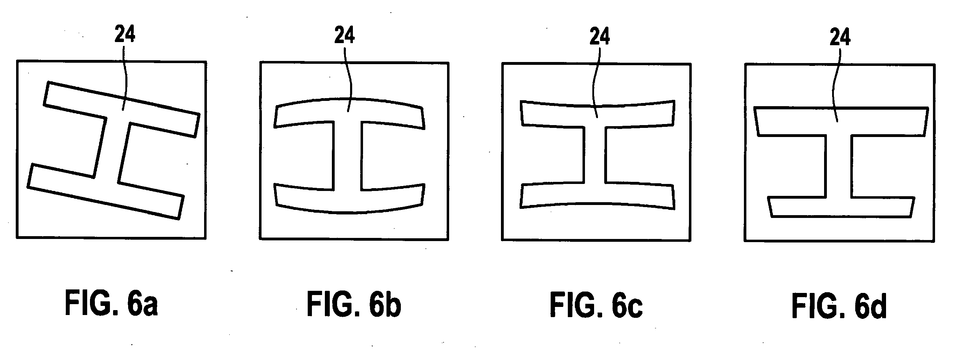

Die Figuren 6a bis 6d zeigen verschiedene Abbildungsfehler, die z. B. durch Fehleinstellungen optischer Elemente hervorgerufen sein können. Die Figur 6a zeigt eine Schiefstellung einer projizierten Marke, die z. B. durch einen ungenauen Einbau des gesamten HUD-Gehäuses 2 (Figur 5) bzw. des Displays 3 hervorgerufen sein kann. Die Figuren 6b und 6c zeigen kissenartige Verzerrungen einer projizierten Marke, die im Fall der Figur 6b konvex und im Fall der Figur 6c konkav verzerrt ist. Solche Verzerrungen können z. B. durch optische Elemente mit vergleichsweise stark gekrümmten Linsen- bzw. Spiegelflächen auftreten. Schließlich zeigt die Figur 6d eine trapezförmig verzerrte Marke, die beispielsweise durch Schiefstellung z. B. des Displays 3 oder eines Spiegels hervorgerufen sein kann.

Vorzugsweise ist das HUD dazu ausgebildet, solche Verzerrungen bis zu einem vorgegebenen Maß selbstständig und insbesondere automatisch zu korrigieren. Die Kamera 16 in Figur 5 nimmt dazu das Bild z. B. einer Marke, die auf den Projektionsschirm 17 projiziert ist, für die Bildverarbeitungseinheit auf. Diese ist dazu ausgebildet, aus einer Kameraaufnahme darin festgehaltene Formen von Verzerrungen zu erkennen und ihrjeweiliges Ausmaß zu bestimmen. Dabei ist es besonders vorteilhaft, wenn die Bildverarbeitungseinheit dazu ausgebildet ist, aus einer solchen Erkennung von optischen Verzerrungen Parameter zu bestimmen, damit das HUD anhand dieser Parameter durch eine kompensierende Vorverzerrung der Bilddaten für das Display 3 den festgestellten Verzerrungen durch z. B. die Abbildungsoptik entgegenwirken kann. Dadurch können Informationsanzeigen des HUDs 1 vorteilhaft in ihrer Erkennbarkeit verbessert werden.

In einer nicht näher gezeigten Ausführung eines erfindungsgemäßen Head-up-Displays können Projektionsmittel für eine zeitweise Nutzung montierbar und entfernbar sein. Hierdurch ist es beispielsweise möglich, dass Projektionsmittel nur als schnell einsetzbares Werkzeug für eine Kalibrierung bzw. Justage z. B. in einer Werkstatt oder z. B. in einem Automobilwerk vorzusehen.

## Patentansprüche

1. Head-up-Display (1) für Fahrzeuge (30), das zur Anzeige von Informationen mittels einer Bildgebungseinheit (3) eine durchsichtige Fläche (31) im Fahrzeug (30) in Blickrichtung eines Betrachters als Anzeigebereich verwendet, wobei zwischen der Bildgebungseinheit (3) und dem Anzeigebereich eine Abbildungsoptik angeordnet ist, mit Anpassungsmitteln, mit denen eine Anzeige von Informationen an verschiedene Augenpositionen des Betrachters angepasst werden kann, mit einer Kamera (16) zur Aufnahme des Kopfes des Betrachters und mit einer Bildverarbeitungseinheit zur Auswertung von Aufnahmen der Kamera (16), wobei Projektionsmittel dazu vorgesehen sind, eine optisch erfassbare Marke (24) in Richtung des Kopfes des Betrachters abzubilden, und dass die Bildverarbeitungseinheit dazu ausgebildet ist, auf der Grundlage einer Aufnahme der Kamera (16) die Marke (24) auszuwerten, **dadurch gekennzeichnet, dass** die Projektionsmittel dazu ausgebildet sind, eine optisch erfassbare Marke (24) mit infrarotem Licht zu erzeugen, das von einer Infrarot-Leuchtdiode (7) erzeugt wird, und dass nach der Infrarot-Leuchtdiode (7) eine Blende (8) angeordnet ist, die die geometrische Form einer einzelnen, zusammenhängenden Marke (24) derart bestimmt, dass die projizierte Marke (24) symmetrisch beide Augen des Betrachters zumindest teilweise umrahmt.

2. Head-up-Display (1) nach Anspruch 1, **dadurch gekennzeichnet, dass** die Bildverarbeitungseinheit dazu ausgebildet ist, mittels einer Aufnahme der Kamera (16) eine Abweichung einer Position eines Bereichs am Kopf des Betrachters, insbesondere der Augen, anhand einer Position einer optisch erfassbaren Marke (24) am Kopf des Betrachters zu bestimmen.

3. Head-up-Display (1) nach Anspruch 2, **dadurch gekennzeichnet, dass** die Bildverarbeitungseinheit dazu ausgebildet ist, anhand der Abweichung Einstellgrößen für die Anpassungsmittel bereitzustellen.

4. Head-up-Display (1) nach einem der vorgenannten Ansprüche, **dadurch gekennzeichnet, dass** die Kamera (16) außerhalb eines Teils (2) des Head-up-Displays (1), in dem die Bildgebungseinheit (3) und die Abbildungsoptik untergebracht sind, positioniert ist.

5. Head-up-Display (1) nach einem der vorgenannten Ansprüche, **dadurch gekennzeichnet, dass** die Projektionsmittel Einstellmittel (6) umfassen, mit denen mindestens ein optisches Element (5) der Projektionsmittel derart einstellbar ist, dass eine optisch erfassbare Marke (24) an verschiedenen Positionen abgebildet werden kann.

6. Head-up-Display (1) nach Anspruch 5, **dadurch gekennzeichnet, dass** die Einstellmittel (6) dazu ausgebildet sind, die Position einer optisch erfassbaren Marke (24) Bewegungen des Kopfes des Betrachters entsprechend mitzuführen.

7. Head-up-Display (1) nach einem der vorgenannten Ansprüche, **dadurch gekennzeichnet, dass** die Projektionsmittel dazu ausgebildet sind, eine optisch erfassbare Marke (24) durch Reflektion an der durchsichtigen Fläche (31) im Fahrzeug (30) in Richtung des Kopfes eines Betrachters zu projizieren.

8. Head-up-Display (1) nach Anspruch 7, **dadurch gekennzeichnet, dass** ein Einkopplungselement (10,12) der Projektionsmittel dazu ausgebildet ist, Licht (22) optisch erfassbarer Marken (24) in einen Abschnitt des Strahlengangs (20) der Abbildungsoptik einzukoppeln.

9. Head-up-Display (1) nach Anspruch 6, **dadurch gekennzeichnet, dass** mindestens eines der optischen Elemente (5) der Abbildungsoptik zur Anpassung an Positionen der Augen des Betrachters einstellbar ist.

10. Head-up-Display (1) nach einem der vorgenannten Ansprüche, **dadurch gekennzeichnet, dass** ein Teil der Projektionsmittel, insbesondere ein lichtabstrahlender Teil (13), in die Bildgebungseinheit (3) integriert ist.

11. Head-up-Display (1) nach einem der vorgenannten Ansprüche, **dadurch gekennzeichnet, dass** die Projektionsmittel dazu ausgebildet sind, eine optisch erfassbaren Marke (24) fortlaufend periodisch über eine vorgegebene Dauer zu projizieren.

12. Head-up-Display (1) nach Anspruch 7, **dadurch gekennzeichnet, dass** die periodische, zeitweise Projektion einer optisch erfassbaren Marke (24) mit einem Signal, insbesondere einem Signal der Kamera (16), synchronisiert ist.

13. Head-up-Display (1) nach einem der vorgenannten Ansprüche, **dadurch gekennzeichnet, dass** das Einkopplungselement (10,12) der Projektionsmittel ein Spiegel (10,12) ist, der für infrarotes Licht transparent ist.

14. Head-up-Display (1) nach einem der vorgenannten Ansprüche, **dadurch gekennzeichnet, dass** die Projektionsmittel derart einstellbar sind, dass eine optisch erfassbare Marke (24) hinsichtlich ihrer Größe und/oder ihrer Form und/oder der Intensität einstellbar ist.

15. Head-up-Display (1) nach einem der vorgenannten Ansprüche, **dadurch gekennzeichnet, dass** ein Projektionsflächenelement (17) vorgesehen ist, das mit Befestigungsmitteln (18) für eine Befestigung an einem Sitz des Betrachters, insbesondere an einer Kopfstütze (34) des Sitzes, ausgestattet ist.

16. Head-up-Display (1) nach Anspruch 15, **dadurch gekennzeichnet, dass** das Projektionsflächenelement (17) mit Messmitteln für eine wiederholbare Positionierung am Sitz, insbesondere an der Kopfstütze (34) des Sitzes, ausgestattet ist.

17. Head-up-Display (1) nach Anspruch 15, **dadurch gekennzeichnet, dass** die Bildverarbeitungseinheit dazu ausgebildet ist, aus einer Kameraaufnahme einer Marke (24) am Projektionsflächenelement (17) geometrische Verzerrungen zu erkennen und anhand erkannter Verzerrungen Korrekturparameter für die Bildgebungseinheit (3) und/oder für die Anpassungsmittel der Abbildungsoptik und/oder für die Einstellmittel (6) der Projektionsmittel bereitzustellen.

18. Anzeigeverfahren für ein Head-up-Display (1) für Fahrzeuge (30), wobei zur Anzeige von Informationen mittels einer Bildgebungseinheit (3) eine durchsichtige Fläche (31) in dem Fahrzeug (30) in Blickrichtung eines Betrachter als Anzeigebereich verwendet wird, wobei mit einer Kamera (16) eine Position eines Kopfes eines Betrachters aufgenommen und die Aufnahme des Kopfes des Betrachters von einer Bildverarbeitungseinheit zur Auswertung von Aufnahmen der Kamera (16) verarbeitet wird, wobei eine Anzeige von Informationen an verschiedene Augenpositionen des Betrachters von Anpassungsmitteln angepasst wird, wobei Projektionsmittel eine optisch erfassbare Marke (24) in Richtung des Kopfes des Betrachters abbilden und wobei die Bildverarbeitungseinheit auf Grundlage einer Aufnahme der Kamera (16) die Marke (24) auswertet und die Anzeige der Informationen in Abhängigkeit von der ermittelten Position des Kopfes des Betrachters angepasst wird, **dadurch gekennzeichnet, dass** die Projektionsmittel die optisch erfassbare Marke (24) mit infrarotem Licht erzeugen, das von einer Infrarot-Leuchtdiode (7) erzeugt wird, und dass eine nach der Infrarot-Leuchtdiode (7) angeordnete Blende (8) die geometrische Form einer einzelnen, zusammenhängenden Marke (24) derart bestimmt, dass die projizierte Marke symmetrisch beide Augen des Betrachters zumindest teilweise umrahmt.

## Claims

1. Head-up display (1) for vehicles (30) which uses a transparent surface (31) in the vehicle (30) in the viewing direction of a viewer as a display region for displaying information by means of an imaging unit (3), wherein imaging optics are arranged between the imaging unit (3) and the display region, with adaptation means with which the displaying of information can be adapted to various positions of the viewer's eyes, with a camera (16) for recording the viewer's head and with an image-processing unit for evaluating recordings from the camera (16), wherein projection means are provided for imaging a visually perceptible mark (24) in the direction of the viewer's head, and in that the image-processing unit is designed to evaluate the mark (24) on the basis of a recording of the camera (16), **characterized in that** the projection means are designed to generate a visually perceptible mark (24) with infra-red light which is generated by an infra-red light-emitting diode (7), and **in that** arranged downstream of the infra-red light-emitting diode (7) is a diaphragm (8) which determines the geometric shape of an individual coherent mark (24) in such a way that the projected mark (24) at least partially forms a border symmetrically about both of the viewer's eyes.

2. Head-up display (1) according to Claim 1, **characterized in that** the image-processing unit is designed to determine, by means of a recording of the camera (16), a difference of a position of a region on the viewer's head, in particular the eyes, with reference to a position of a visually perceptible mark (24) on the viewer's head.

3. Head-up display (1) according to Claim 2, **characterized in that** the image-processing unit is designed to make available adjustment variables for the adaptation means by reference to the difference.

4. Head-up display (1) according to one of the abovementioned claims, **characterized in that** the camera (16) is positioned outside of a part (2) of the head-up display (1) in which the imaging unit (3) and the imaging optics are accommodated.

5. Head-up display (1) according to one of the abovementioned claims, **characterized in that** the projection means comprise adjustment means (6) with which at least one optical element (5) of the projection means can be adjusted in such a way that a visually perceptible mark (24) can be imaged at various positions.

6. Head-up display (1) according to Claim 5, **characterized in that** the adjustment means (6) are designed to make the position of a visually perceptible mark (24) correspondingly move along with movements of the viewer's head.

7. Head-up display (1) according to one of the abovementioned claims, **characterized in that** the projection means are designed to project a visually perceptible mark (24) in the direction of a viewer's head by reflection at the transparent surface (31) in the vehicle (30).

8. Head-up display (1) according to Claim 7, **characterized in that** an input element (10, 12) of the projection means is designed to input light (22) of visually perceptible marks (24) into a section of the beam path (20) of the imaging optics.

9. Head-up display (1) according to Claim 6, **characterized in that** at least one of the optical elements (5) of the imaging optics can be adjusted to adapt to positions of the viewer's eyes.

10. Head-up display (1) according to one of the abovementioned claims, **characterized in that** a part of the projection means, in particular a light-irradiating part (13), is integrated into the imaging unit (3).

11. Head-up display (1) according to one of the abovementioned claims, **characterized in that** the projection means are designed to project a visually perceptible mark (24) in a continuously periodic fashion over a predefined period.

12. Head-up display (1) according to Claim 7, **characterized in that** the periodic, temporary projection of a visually perceptible mark (24) is synchronized with a signal, in particular a signal of the camera (16).

13. Head-up display (1) according to one of the abovementioned claims, **characterized in that** the input element (10, 12) of the projection means is a mirror (10, 12) which is transparent to infra-red light.

14. Head-up display (1) according to one of the abovementioned claims, **characterized in that** the projection means can be adjusted in such a way that a visually perceptible mark (24) can be adjusted in terms of its size and/or its shape and/or the intensity.

15. Head-up display (1) according to one of the abovementioned claims, **characterized in that** a projection surface element (17) is provided which is equipped with attachment means (18) for attachment to a seat of the viewer, in particular to a head rest (34) of the seat.

16. Head-up display (1) according to Claim 15, **characterized in that** the projection surface element (17) is equipped with measuring means for repeatable positioning on the seat, in particular on the head rest (34) of the seat.

17. Head-up display (1) according to Claim 15, **characterized in that** the image-processing unit is designed to detect geometric distortions from a camera recording of a mark (24) on the projection surface element (17) and to make available correction parameters for the imaging unit (3) and/or for the adaptation means of the imaging optics and/or for the adjustment means (6) of the projection means on the basis of detected distortions.

18. Display method for a head-up display (1) for vehicles (30), wherein a transparent surface (31) in the vehicle (30) in the viewing direction for a viewer is used as a display region for displaying information by means of an imaging unit (3), wherein a position of a viewer's head is recorded with a camera (16), and the recording of the viewer's head is processed by an imaging unit in order to evaluate recordings of the camera (16) wherein a display of information is adapted to various positions of the viewer's eyes by adaptation means, wherein projection means image a visually perceptible mark (24) in the direction of the viewer's head, and wherein the imaging unit evaluates the mark (24) on the basis of a recording of the camera (16), and the display of the information is adapted as a function of the determined position of the viewer's head, **characterized in that** the projection means generate the visually perceptible mark (24) with infra-red light which is generated by an infra-red light-emitting diode (7), and **in that** a diaphragm (8) which is arranged downstream of the infra-red light-emitting diode (7) determines the geometric shape of an individual, coherent mark (24) in such a way that the projected mark at least partially forms a border in a symmetrical fashion at both of the viewer's eyes.

## Revendications

1. Dispositif d'affichage tête haute (1) pour véhicules (30), qui utilise en tant que zone d'affichage pour l'affichage d'informations, au moyen d'une unité de reproduction d'images (3), une surface transparente (31) dans le véhicule (30) dans l'axe de vision d'un observateur, une optique de représentation étant disposée entre l'unité de reproduction d'images (3) et la zone d'affichage, comprenant des moyens d'adaptation avec lesquels un affichage d'informations peut être adapté à différentes positions des yeux de l'observateur, comprenant une caméra (16) destinée à enregistrer la tête de l'observateur et comprenant une unité de traitement d'images destinée à interpréter les enregistrements de la caméra (16), des moyens de projection étant prévus pour représenter un repère (24) détectable optiquement dans la direction de la tête de l'observateur, et l'unité de traitement d'images étant configurée pour interpréter le repère (24) en se basant sur un enregistrement de la caméra (16), **caractérisé en ce que** les moyens de projection sont configurés pour générer un repère (24) détectable optiquement avec de la lumière infrarouge qui est générée par une diode électroluminescente à infrarouge (7) et **en ce qu'**un diaphragme (8) est disposé après la diode électroluminescente à infrarouge (7), lequel détermine la forme géométrique d'un repère (24) individuel cohérent de telle sorte que le repère (24) projeté encadre symétriquement au moins partiellement les deux yeux de l'observateur.

2. Dispositif d'affichage tête haute (1) selon la revendication 1, **caractérisé en ce que** l'unité de traitement d'images est configurée pour déterminer, au moyen d'un enregistrement de la caméra (16), un écart d'une position d'une zone sur la tête de l'observateur, notamment les yeux, à l'aide d'une position d'un repère (24) détectable optiquement sur la tête de l'observateur.

3. Dispositif d'affichage tête haute (1) selon la revendication 2, **caractérisé en ce que** l'unité de traitement d'images est configurée pour, à l'aide de l'écart, délivrer des grandeurs de réglage pour les moyens d'adaptation.

4. Dispositif d'affichage tête haute (1) selon l'une des revendications précédentes, **caractérisé en ce que** la caméra (16) est positionnée à l'extérieur d'une partie (2) du dispositif d'affichage tête haute (1) dans laquelle sont logées l'unité de reproduction d'images (3) et l'optique de représentation.

5. Dispositif d'affichage tête haute (1) selon l'une des revendications précédentes, **caractérisé en ce que** les moyens de projection comprennent des moyens de réglage (6) avec lesquels au moins un élément optique (5) des moyens de projection peut être réglé de telle sorte qu'un repère (24) détectable optiquement peut être représenté en différentes positions.

6. Dispositif d'affichage tête haute (1) selon la revendication 5, **caractérisé en ce que** les moyens de réglage (6) sont configurés pour faire suivre à la position d'un repère (24) détectable optiquement les mouvements de la tête de l'observateur.

7. Dispositif d'affichage tête haute (1) selon l'une des revendications précédentes, **caractérisé en ce que** les moyens de projection sont configurés pour projeter un repère (24) détectable optiquement par réflexion sur la surface transparente (31) dans le véhicule (30) en direction de la tête d'un observateur.

8. Dispositif d'affichage tête haute (1) selon la revendication 7, **caractérisé en ce qu'**un élément d'injection (10, 12) des moyens de projection est configuré pour l'injection de la lumière (22) de repères (24) détectables optiquement dans une portion du trajet de rayon (20) de l'optique de représentation.

9. Dispositif d'affichage tête haute (1) selon la revendication 6, **caractérisé en ce qu'**au moins l'un des éléments optiques (5) de l'optique de représentation est réglable en vue de l'adaptation aux positions des yeux de l'observateur.

10. Dispositif d'affichage tête haute (1) selon l'une des revendications précédentes, **caractérisé en ce qu'**une partie des moyens de projection, notamment une partie émettant de la lumière (13), est intégrée dans l'unité de reproduction d'images (3).

11. Dispositif d'affichage tête haute (1) selon l'une des revendications précédentes, **caractérisé en ce que** les moyens de projection sont configurés pour projeter en continu un repère (24) détectable optiquement périodiquement sur une durée pouvant être prédéfinie.

12. Dispositif d'affichage tête haute (1) selon la revendication 7, **caractérisé en ce que** la projection périodique temporaire d'un repère (24) détectable optiquement est synchronisée avec un signal, notamment un signal de la caméra (16).

13. Dispositif d'affichage tête haute (1) selon l'une des revendications précédentes, **caractérisé en ce que** l'élément d'injection (10, 12) des moyens de projection est un miroir (10, 12) qui est transparent à la lumière infrarouge.

14. Dispositif d'affichage tête haute (1) selon l'une des revendications précédentes, **caractérisé en ce que** les moyens de projection peuvent être réglés de telle sorte qu'il est possible de régler la taille et/ou la forme et/ou l'intensité d'un repère (24) détectable optiquement.

15. Dispositif d'affichage tête haute (1) selon l'une des revendications précédentes, **caractérisé en ce qu'**il existe un élément à surface de projection (17) qui est équipé de moyens de fixation (18) pour une fixation à un siège de l'observateur, notamment à un appuie-tête (34) du siège.

16. Dispositif d'affichage tête haute (1) selon la revendication 15, **caractérisé en ce que** l'élément à surface de projection (17) est équipé de moyens de mesure pour un positionnement reproductible sur le siège, notamment sur l'appuie-tête (34) du siège.

17. Dispositif d'affichage tête haute (1) selon la revendication 15, **caractérisé en ce que** l'unité de traitement d'images est configurée pour identifier des déformations géométriques à partir d'un enregistrement par la caméra d'un repère (24) sur l'élément à surface de projection (17) et, à l'aide des déformations identifiées, délivrer des paramètres de correction pour l'unité de reproduction d'images (3) et/ou pour les moyens d'adaptation de l'optique de représentation et/ou pour les moyens de réglage (6) des moyens de projection.

18. Procédé d'affichage pour un dispositif d'affichage tête haute (1) pour véhicules (30), une surface transparente (31) dans le véhicule (30) dans l'axe de vision d'un observateur étant utilisée en tant que zone d'affichage pour l'affichage d'informations au moyen d'une unité de reproduction d'images (3), une position d'une tête d'un observateur étant enregistrée avec une caméra (16) et l'enregistrement de la tête de l'observateur étant traité par une unité de traitement d'images destinée à interpréter les enregistrements de la caméra (16), un affichage d'informations étant adapté aux différentes positions des yeux de l'observateur par des moyens d'adaptation, des moyens de projection représentant un repère (24) détectable optiquement dans la direction de la tête de l'observateur et l'unité de traitement d'images interprétant le repère (24) en se basant sur un enregistrement de la caméra (16) et l'affichage des informations étant adapté en fonction de la position déterminée de la tête de l'observateur, **caractérisé en ce que** les moyens de projection génèrent le repère (24) détectable optiquement avec de la lumière infrarouge qui est générée par une diode électroluminescente à infrarouge (7), et **en ce qu'**un diaphragme (8) disposé après la diode électroluminescente à infrarouge (7) détermine la forme géométrique d'un repère (24) individuel cohérent de telle sorte que le repère projeté encadre symétriquement au moins partiellement les deux yeux de l'observateur.
